# EUROPÄISCHE PATENTANMELDUNG

(11) **EP 1 143 279 A2**
(43) Veröffentlichungstag der Anmeldung: **10.10.2001**
(21) Anmeldenummer: 01102591.3
(22) Anmeldetag: 06.02.2001
(51) Int. Cl.: G02B 6/44

(54) **Kabelführungseinrichtung zur Verbindung von Verteilerschränken mit Glasfaser-Patchkabeln**

(30) Priorität: 07.02.2000 DE 10005294
(71) Anmelder: SCC Special Communication Cables GmbH & Co. KG, 81379 München (DE)
(72) Erfinder: Iwanek, Waldemar, Dipl.-Ing., 44369 Dortmund (DE)
(74) Vertreter: Viering, Jentschura & Partner

(57) **Zusammenfassung**

Eine Kabelführungseinrichtung zur Verbindung von Verteilerschränken (2,4) mit Glasfaserkabeln mit wenigstens zwei Verteilerschränken, die über Patchkabel miteinander verbunden sind, hat eine an einer Gehäusewand (16) des einen Verteilerschrankes (2) angeordnete Durchführungseinrichtung (20) für die Patchkabel, einen Kabelkanal (28) zu einer Gehäusewand des anderen Verteilerschrankes (4) und eine an einer Gehäusewand des anderen Verteilerschrankes (4) angeordnete Durchführungseinrichtung (34) für die Patchkabel.

## Beschreibung

Die Erfindung betrifft eine Kabelführungseinrichtung zur Verbindung von Verteilerschränken mit Glasfaser-Patchkabeln mit mindestens zwei Verteilerschränken, die über die Patchkabel miteinander verkabelt sind.

Die Tendenz zum Einsatz von Glasfaserkabeln in der Kommunikation, beispielsweise bei der Übermittlung von Sprach- und Bilddaten, führt zu immer komplexeren Schaltanlagen. Diesen Schaltanlagen sind eine Mehrzahl Glasfaserverteilgestelle angeordnet, die zu ihrem überwiegenden Teil aus Schaltfeldern beziehungsweise Patchfeldern bestehen. In diesen Schaltfeldern enden die externen Kabel und werden über Glasfaser-Patchkabel, untereinander verbunden. Die Patchkabel sind Kabel mit einer oder mehreren von einem Kabelmantel und von Zugabfangelementen umgebenen Glasfasern, die an beiden Seiten eine Kupplungsvorrichtung, beispielsweise einen Stekker,aufweisen. Die Schaltfelder sind mit einer Vielzahl von Kupplungen ausgestaltet, die die Verbindung der externen Glasfaserkabel und der Patchkabel ermöglichen.

Beim Aufbau moderner Glasfasernetzwerke ist es nicht mehr möglich, die gesamte Anzahl der Patchverbindungen in einem Verteilerschrank unterzubringen. Daher ist es notwendig, mehrere Verteilerschränke (HDC) zu stellen. In diesen Fällen ist fast immer unumgänglich, die Patchverbindungen zwischen den einzelnen Verteilern zu verlegen. Aus diesem Grund ist es erforderlich, eine geeignete Kabelführung einzusetzen, die es ermöglicht, die Patchkabel sicher in den Verteilerschrank einzuführen und die Kabel zwischen den Verteilerschränken oder zum Endverteiler zu verlegen. Bei der LWL-Technik werden allerdings an die Leitungsführung besondere Anforderungen gestellt. Um die Übertragungsverluste zu minimieren, müssen bei den Glasfaserkabeln die Mindestbiegeradien eingehalten werden, die bei gängigen Glasfaserkabeln bei etwa 3 cm liegen. Diese Mindestbiegeradien müssen auch auf der Kabelführung von einem Verteilerschrank zum andern, und insbesondere an den Stellen eingehalten werden, an denen die Glasfaserkabeln aus einem Verteilerschrank heraus oder in einen Verteilerschrank hineingeführt werden.

Aufgabe der Erfindung ist es daher, ein Kabelführungseinrichtung zur Verbindung von Verteilerschränken mit Glasfaserkabeln bereitzustellen, die eine störungsfreie und übersichtliche Verbindung der Verteilerschränke mit Glasfaser-Patchkabeln ermöglicht, wobei der Mindestbiegeradius der Patchkabel eingehalten werden kann.

Erfindungsgemäß wird die Aufgabe durch eine Kabelführungseinrichtung nach Anspruch 1 gelöst. Die weiteren Ansprüche betreffen vorteilhafte Ausgestaltungen der Erfindung.

Zur Lösung der Aufgabe ist die erfindungsgemäße Kabelführungseinrichtung gekennzeichnet durch eine an einer Gehäusewand des Verteilerschrankes angeordnete Durchführungseinrichtung für die Patchkabel, einen Kabelkanal zu einer Gehäusewand des anderen Verteilerschrankes angeordnete Durchführungseinrichtungen für die Patchkabel.

Durch diese Kabelführungseinrichtung ist es in vorteilhafter Weise möglich, die Patchkabel übersichtlich und mit Krümmungsradien zu verlegen, die größer als der kritische Minimumbiegeradius sein können. Mit Hilfe der erfindungsgemäßen Einrichtung ist es in vorteilhafter Weise ferner möglich, vorkonfektionierte Patchkabel aus dem HDC-Verteilerschrank herauszuführen, zu dem nächsten Verteilerschrank zu überführen und in den nächsten Verteilerschrank wieder einzuführen.

Eine vorteilhafte Ausgestaltung der erfindungsgemäßen Kabelführungseinrichtung ist dadurch gekennzeichnet, dass die Durchführungseinrichtung an dem Gehäusedeckel des Verteilerschrankes angeordnet ist. Dadurch wird in vorteilhafter Weise ermöglicht, dass das Patchkabel aus dem Verteilerschrank derart herausgeführt werden kann, dass die Kabel beim Schwenken eines Rahmens des Verteilerschrankes nicht einer schädlichen Zugbeanspruchung ausgesetzt werden.

Eine weitere vorteilhafte Ausgestaltung der erfindungsgemäßen Kabelführungseinrichtung ist dadurch gekennzeichnet, dass die Durchführungseinrichtung einen an einer Durchführungsöffnung an dem Gehäuse des Verteilerschrankes angeordneten ersten Führungsteil aufweist, der in vorteilhafter Weise dafür sorgt, dassder Mindestbiegeradius an dem Glasfaserkabel nicht unterschritten wird, wenn das Glasfaserkabel aus dem Verteilerschrank herausgeführt wird.

Eine weitere vorteilhafte Ausgestaltung der erfindungsgemäßen Kabelführungseinrichtung ist dadurch gekennzeichnet, dass der Führungsteil eine gekrümmte Form hat, deren Krümmungsradius größer als der Mindestbiegeradius des Patchkabels ist und senkrecht auf der Längsrichtung der verlegten Patchkabel steht. Das Glasfaserkabel wird daher zwangsweise so aus dem Verteilerschrank herausgeführt, dass der Mindestbiegeradius nicht unterschritten werden kann.

Eine weitere vorteilhafte Ausgestaltung der erfindungsgemäßen Kabelführungseinrichtung ist dadurch gekennzeichnet, dass die Durchführungseinrichtunge einen zweiten Führungsteil zur Überführung des Patchkabels von dem Verteilerschrank zu dem ersten Führungsteil aufweist, so dass die von Kupplungen in dem Verteilerschrank kommenden Patchkabel vom Inneren des Verteilerschrankes her ohne Unterschreitung des Mindestbiegeradius zu dem ersten Führungsteil der Durchführungseinrichtung geführt wird.

Eine weitere vorteilhafte Ausgestaltung der erfindungsgemäßen Kabelführungseinrichtung ist dadurch gekennzeichnet, dass der zweite Führungsteil eine gekrümmte Form hat, deren Krümmungsradius größer als der Mindestbiegeradius des Patchkabels ist und senkrecht auf der Längsrichtung des verlegten Patchkabels steht. Wie bei dem ersten Führungsteil wird dadurch eine Unterschreitung des Mindestbiegeradiusses mit Sicherheit vermieden.

Eine weitere vorteilhafte Ausgestaltung der erfindungsgemäßen Kabelführungseinrichtung ist dadurch gekennzeichnet, dass der Kabelkanal aus Eckelementen und/oder geraden Elementen modular aufgebaut ist. Damit kann in vorteilhafter Weise jede denkbare Kabelstrecke zwischen zwei Verteilerschränken aufgebaut werden, ohne dass jeweils spezielle Teile dazu erforderlich wären.

Eine weitere vorteilhafte Ausgestaltung der erfindungsgemäßen Kabelführungseinrichtung ist dadurch gekennzeichnet, dass an den Ecken der Kabelkanäle Führungseinsätze angeordnet sind, die eine gekrümmte Form haben, deren Radius größer als der Mindestbiegeradius des Patchkabels ist. Dadurch wird in vorteilhafter Weise erreicht, dass an den Stellen, wo der Kabelkanal einen Biegung von beispielsweise 90° macht, der Mindestbiegeradius des Kabels nicht unterschritten wird.

Ausführungsbeispiele der Erfindung werden nun unter Bezugnahme auf die beiliegenden Zeichnungen beschrieben. Es zeigen:
- Figur 1: eine erste Ausführungsform der erfindungsgemäßen Kabelführungseinrichtung mit zwei Verteilerschränke;
- Figur 2: eine vergrößerte Detaildarstellung von Figur 1; und
- Figur 3: eine zweite Ausführungsform der erfindungsgemäßen Kabelführungseinrichtung für zwei Verteilerschränke.

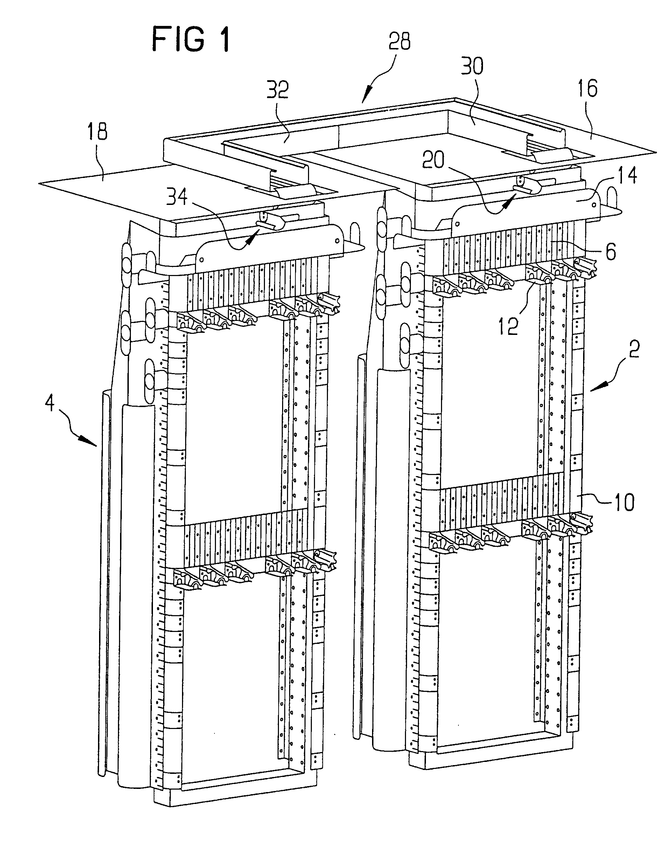

Die in Fig. 1 gezeigte Anordnung weist zwei Verteilerschränke 2,4, die in seinen Abmessungen zur Aufnahme in einen 19" Normschrank mit in der Höhe genormten Standardeinschüben von 44,46 mm ausgestaltet ist.

In einem Verteilerschrank, beispielsweise in den Verteilerschrank 2 sind eine Vielzahl von Kupplungen 6 auf einem Schaltfeldrahmen 10 ausgebildet. An diesen Kupplungen 6 enden zum einen die von außen zugeführten, externen Glasfaserkabel. Zum anderen sind die Kupplungen jeweils mit Patchkabeln verbunden.

Die Glasfaserkabel-Patchkabel werden über eine Rangierführung 12 beziehungsweise Faserführung weitergeführt. Die gezeigte Rangierführung 12 führt das Glasfaserkabel-Patchkabel nach rechts, wobei darauf geachtet wird, dass der Mindestbiegeradius des Patchkabels nicht unterschritten wird.

Um die Verbindung von zwei Kupplungen 6 in dem Verteilerschrank zu verwirklichen, wird das Patchkabel nach Durchlaufen der Schleife zwischen zwei Rangierführungen 12 geführt und in der entsprechenden Gegenkupplung festgelegt. Die Schleifen des Patchkabels werden dabei, wenn sie von einer Seite des Schaltfeldrahmens 10 zur anderen geführt werden, durch einen Führungskanal 14 geführt, der oberhalb von den Kupplungen 6 in dem Verteilerschrank angeordnet ist.

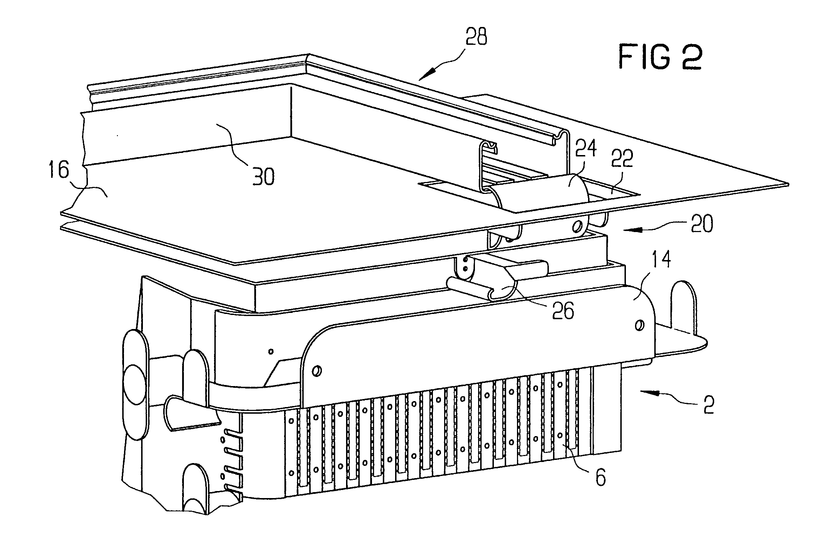

Wie in Fig. 1 dargestellt ist, sind die Verteilerschränke 2, 4 durch Gehäusedeckel 16, 18 nach oben abgeschlossen, die Bestandteil der ansonsten nicht gezeigten Gehäuse der Verteilerschränke 2, 4 sind. Der Deckelbereich des Gehäuses ist in einer vergrößerten Detaildarstellung in Fig. 2 gezeigt, wo insbesondere die Kupplungen 6 und der Führungskanal 14 sowie der Gehäusedeckel 16 des Verteilerschrankes 2 dargestellt ist. Wie aus Fig. 2 ersichtlich ist, hat der Gehäusedeckel 16 eine Durchführungseinrichtung 20, die eine Durchführungsöffnung 22, einen ersten Führungsteil 24 und einen zweiten Führungsteil 26 aufweist. Der erste Führungsteil 24 hat eine gekrümmte Form, deren Radius größer als der Mindestbiegeradius des Glasfaserkabels ist, und steht senkrecht auf der Längsrichtung des verlegten Patchkabels, welches von unten durch die Durchführungsöffnung 22 über den Führungsteil 24 geführt wird. Der zweite Führungsteil 26 hat ebenfalls eine gekrümmte Form und einen Krümmungsradius, der größer als der Mindestbiegeradius des Glasfaserkabels ist. Die Längsachse des zweiten Führungsteiles 26 steht ebenfalls senkrecht auf der Längsrichtung des verlegten Patchkabels, welches aus dem Führungskanal 14 zunächst über den Führungsteil 26 und von dort über den Führungsteil 28 und dann weiter in einen Kabelkanal 28 geführt wird.

Der Kabelkanal 28 ist bei dem Ausführungsbeispiel der Figuren 1 und 2 aus zwei Eckelementen 30, 32 aufgebaut. Es ist ersichtlich, dass zwischen den Eckelementen 30, 32 auch ein geradliniges Element vorgesehen werden kann, wenn der Abstand der beiden dazu verbindenden Verteilerschränke größer ist als in Fig. 1 dargestellt ist. An den Enden des Kabelkanals befindet sich dann die Durchführungseinrichtung 20 beziehungsweise die Durchführungseinrichtung 34, um die Patchkabel aus dem einen Verteilerschrank heraus zu dem anderen Verteilerschrank zu führen.

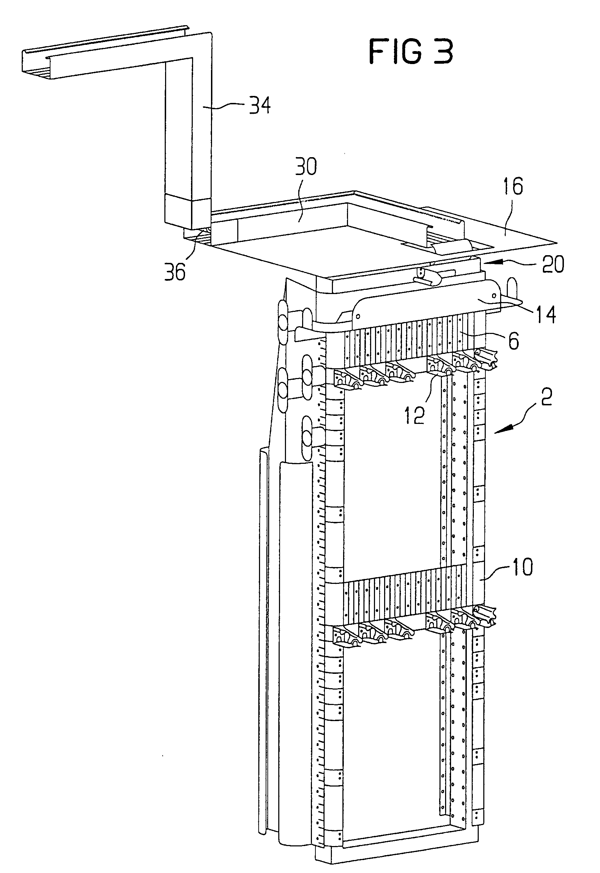

Fig. 3 zeigt wiederum den Verteilerschrank 2 mit dem Rahmen 10, den Kupplungen 12 und dem Führungskanal 14 sowie dem Dekkel 16. Die gezeigte Kabelführungseinrichtung umfasst die Durchführungseinrichtung 20, die oben beschrieben wurde, ein Eckelement 30, dessen Boden horizontal auf dem Gehäusedeckel 16 liegt, und ein Eckelement 34, welches die Patchkabel aus der Ebene des Gehäusedeckels 16 heraus nach oben und zur Seite (nach links in Fig. 3) führt. Aus Fig. 3 ist daher ersichtlich, dass durch einen modularen Aufbau des Kabelkanals beliebige Kabelstrecken zwischen zwei Verteilerschränken verlegt werden können.

An dem Übergang von dem Eckelement 30 zu dem Eckelement 34 ist ein Führungseinsatz 36 zu erkennen, der wiederum eine gekrümmte Form hat, deren Krümmungsradius größer als der Mindestbiegeradius des Patchkabels ist, wie es auch bei den Führungsteilen 24, 26 der Fall war. Führungseinsätze wie der Führungseinsatz 36 sorgen an den Stellen, an denen der Kabelkanal seine Richtung ändert, dafür, dass die Patchkabel nicht übermäßig gebogen werden.

Aus der vorgehenden Beschreibung ist ersichtlich, dass die erfindungsgemäße Kabelführungseinrichtung baukastenartig aufgebaut ist, so dass aus wenigen Teilen beliebig viele Kabelführungsstrecken aufgebaut werden können. In den Figuren sind Standard-Kabelkanalelemente dargestellt, wie sie beispielsweise von der Fa. TEHALIT geliefert werden. Selbstverständlich können auch andere Typen von Kabelkanälen oder Führungseinrichtungen, die einen derartigen Zweck erfüllen, verwendet werden.

## Patentansprüche

1. Kabelführungseinrichtung zur Verbindung von Verteilerschränken mit Glasfaserkabeln mit wenigstens zwei Verteilerschränken, die über Patchkabel miteinander verbunden sind,
**gekennzeichnet durch**
eine an einer Gehäusewand (16; 18) des einen Verteilerschrankes (2, 4) angeordnete Durchführungseinrichtung (20) für die Patchkabel, einen Kabelkanal (28) zu einer Gehäusewand des anderen Verteilerschrankes (4) und eine an einer Gehäusewand des anderen Verteilerschrankes (4) angeordnete Durchführungseinrichtung (34) für die Patchkabel.

2. Kabelführungseinrichtung nach Anspruch 1,
**dadurch gekennzeichnet, dass**
die Durchführungseinrichtung (20) an dem Gehäusedeckel (16) des Verteilerschrankes (2) angeordnet ist.

3. Kabelführungseinrichtung nach Anspruch 1,
**dadurch gekennzeichnet, dass**
die Durchführungseinrichtung (20) einen an einer Durchführungsöffnung (22) an dem Gehäuse des Verteilerschrankes (2) angeordneten ersten Führungsteil (24) aufweist.

4. Kabelführungseinrichtung nach Anspruch 3,
**dadurch gekennzeichnet, dass**
der Führungsteil (24) eine gekrümmte Form hat, deren Krümmungsradius größer ist als der Mindestbiegeradius des Patchkabels und senkrecht auf der Längsrichtung der verlegten Patchkabels steht.

5. Kabelführungseinrichtung nach Anspruch 3,
**dadurch gekennzeichnet, dass**
die Durchführungseinrichtung (20) einen zweiten Führungsteil (26) zur Überführung der Patchkabel von dem Verteilerschrank (2) zu dem ersten Führungsteil (24) aufweist.

6. Kabelführungseinrichtung nach Anspruch 5,
**dadurch gekennzeichnet, dass**
der Führungsteil eine gekrümmte Form hat, deren Radius größer als der Mindestbiegeradius des Patchkabel ist und senkrecht auf der Längsrichtung des verlegten Patchkabels steht.

7. Kabelführungseinrichtung nach Anspruch 1,
**dadurch gekennzeichnet, dass**
der Kabelkanal (28) aus Eckelementen (30, 32) und/oder geraden Elementen modular aufgebaut ist.

8. Kabelführungseinrichtung nach Anspruch 1 oder 7,
**dadurch gekennzeichnet, dass**
an den Ecken des Kabelkanals (28) Führungseinsätze (36) angeordnet sind, die eine gekrümmte Form haben, deren Radius größer als der Mindestbiegeradius des Patchkabels ist und senkrecht auf der Längsrichtung des verlegten Patchkabels steht.
